# EUROPEAN PATENT APPLICATION

(11) **EP 3 059 497 A2**
(43) Date of publication of application: **24.08.2016**
(21) Application number: 16156380.4
(22) Date of filing: 18.02.2016
(51) Int. Cl.: F23R 3/04, F23D 11/10

(54) **ENHANCED TURBULENT MIXING**

(30) Priority: 18.02.2015 US 201562117778 P; 18.02.2015 US 201562117814 P
(71) Applicant: Delavan, Inc., West Des Moines, IA 50265 (US)
(72) Inventor: RYON, Jason A., Carlisle, Iowa 50047 (US); BUELOW, Philip E.O., West Des Moines, Iowa 50266 (US); PROCIW, Lev Alexander, Johnston, Iowa 50131 (US)
(74) Representative: Hague, Alison Jane

(57) **Abstract**

A flow directing apparatus (100; 200; 300; 400; 500; 600) for directing fluid flowing therethrough includes a flow body (102; 202) defining an upstream facing inlet surface (104) and an opposed downstream facing outlet surface (106) with a bore (108; 208, 209; 550, 556; 608) defined through the flow body (102; 202). The bore (108; 208, 209; 550, 556; 608) includes an inlet portion (110) of the bore extending in a downstream direction from an inlet (112) where the bore meets the inlet surface (104). An intermediate portion (114) of the bore extends in a downstream direction from the inlet portion (110) of the bore. A backstep portion (116; 314; 414) of the bore extends downstream from the intermediate portion (114) of the bore to an outlet (118) where the bore meets the outlet surface (106). The intermediate portion (114) of the bore has a cross-sectional flow area that is smaller than that of the inlet portion (110) and smaller than that of the backstep portion (116; 314; 414) to provide a backward facing step in flow area for flow through the bore (108; 208, 209; 550, 556; 608).

## Description

### BACKGROUND OF THE INVENTION

### 1. Field of the Invention

The present disclosure relates to flow directing apparatus and mixers, and more particularly to fuel mixers such as used in atomizers and injectors for gas turbine engines.

### 2. Description of Related Art

Mixers are used in many applications where air or some other gas is used to mix and distribute a substance. A particular mixer known in the industry as a drilled hole swirler is used often in fuel injectors for gas turbine combustors to mix and distribute the fuel and air. The drilled holes through the air cap are arranged in a pattern which best fits the combustor geometry in order to optimize the flame distribution throughout the combustor. Traditionally, the drilled holes are cylindrical in nature. In some instances, it has been found that modifying the geometry at the entrance to the drilled hole can increase the discharge coefficient and decrease part-to-part variability of these features, as taught in U.S. Patent Application Publication No. 2014/0166143, which is incorporated by reference herein in its entirety.

Such conventional methods and systems have generally been considered satisfactory for their intended purpose. However, there is an ongoing need in the art for improved turbulent mixing. The present disclosure provides a solution for this need.

### SUMMARY OF THE INVENTION

Viewed from one aspect a flow directing apparatus for directing fluid flowing therethrough includes a flow body defining an upstream facing inlet surface and an opposed downstream facing outlet surface with a bore defined through the flow body from the inlet surface to the outlet surface. The bore is configured to direct fluid flowing therethrough and includes an inlet portion of the bore extending in a downstream direction from an inlet where the bore meets the inlet surface. An intermediate portion of the bore extends in a downstream direction from the inlet portion of the bore. A backstep portion of the bore extends downstream from the intermediate portion of the bore to an outlet where the bore meets the outlet surface. The intermediate portion of the bore has a cross-sectional flow area that is smaller than or equal to that of the inlet portion and smaller than that of the backstep portion to provide a backward facing step in flow area for flow through the bore.

The intermediate portion of the bore can meet the backstep portion of the bore a position that is between about 20% to about 50% of a length of the bore defined from the inlet to the exit of the bore. The backstep portion of the bore can have a diameter that is between about 20% and about 80% larger than the diameter of the intermediate portion of the bore. It is also contemplated that the backstep portion can have a cross-sectional area, e.g., normal to the flow direction, that is between about 40% to 225% larger than that of the intermediate portion. The intermediate portion of the bore can be dimensioned to meter flow through the bore. The inlet portion of the bore can include at least one of a countersink with a larger cross-sectional area than that of the bore downstream of the countersink, or a chamfer with a larger cross-sectional area than that of the bore downstream of the countersink. The backstep portion of the bore can include a diffuser, e.g., a bellmouth diffuser, tapered diffuser, or the like, opening gradually downstream of the intermediate portion.

In another aspect, a flow directing apparatus can include a plurality of bores as described above. The flow body can be a mixer and the bores can be arranged circumferentially about a center axis defined by the flow body. Each bore can be aligned along a bore axis that has at least one of a tangential directional component, a converging directional component, or a diverging directional component relative to a center axis defined by the flow body. The bores can include an inner set of bores arranged circumferentially about a centerline axis defined by the flow body, and an outer set of bores arranged circumferentially about the centerline axis outboard of the inner set of bores. A pressure atomizer can be incorporated in the flow body. In additional to or in lieu of the pressure atomizer, any other suitable device for injecting fuel into a system can be used, such as a prefilming circuit or other advanced prefilming atomizer, fuel jets such as a jet in a cross-flow, multipoint injector, or the like.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a perspective view of an exemplary embodiment of a flow body constructed in accordance with the present disclosure, showing the downstream outlet surface;
Fig. 2 is a cross-sectional side elevation view of the flow body of Fig. 1, showing the corresponding cross-section indicated in Fig. 1;
Fig. 3 is a cross-sectional side elevation view of the flow body of Fig. 1, showing the corresponding cross-section indicated in Fig. 1;
Fig. 4 is a perspective view of an exemplary embodiment of an atomizer including a flow body constructed in accordance with the present disclosure, wherein the flow body is an air swirler;
Fig. 5 is a cross-sectional side elevation view of the pressure atomizer of Fig. 4, showing the pressure atomizer;
Fig. 6 is a cross-sectional side elevation view of the pressure atomizer of Fig. 4, showing the backstep in one of the bores through the air swirler;
Fig. 7 is a schematic cross-sectional side elevation view of an exemplary embodiment of a flow directing device, showing an intermediate portion of the bore that is a tapered diffuser;
Fig. 8 is a schematic cross-sectional side elevation view of another exemplary embodiment of a flow directing device, showing an intermediate portion of the bore that is a bellmouth diffuser;
Fig. 9 is a perspective view of another exemplary embodiment of a flow directing device, showing back step bores that include fuel injection orifices; and
Fig. 10 is a perspective view of another exemplary embodiment of a flow directing device, showing back step bores that are curved.

### DETAILED DESCRIPTION OF THE PREFERRED EMBODIMENTS

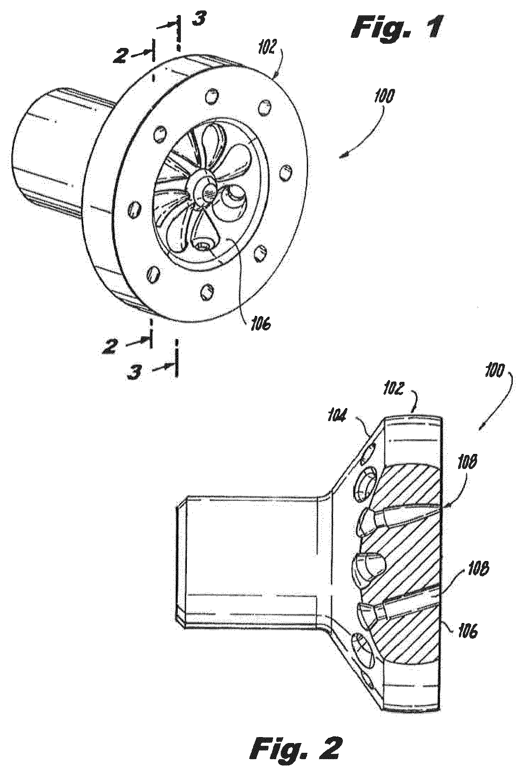

Reference will now be made to the drawings wherein like reference numerals identify similar structural features or aspects of the subject disclosure. For purposes of explanation and illustration, and not limitation, a partial view of an exemplary embodiment of a flow body in accordance with the disclosure is shown in Fig. 1 and is designated generally by reference character 100. Other embodiments of flow bodies in accordance with the disclosure, or aspects thereof, are provided in Figs. 2-10, as will be described. The systems and methods described herein can be used to enhance turbulent mixing, e.g. for fuel injection and the like. The systems and methods described herein can increase turbulent kinetic energy and thereby improve the local mixing characteristics relative to traditional configurations, for example in drilled hole type swirlers.

Flow directing apparatus 100 for directing fluid flowing therethrough includes a flow body 102 defining an upstream facing inlet surface 104, shown in Fig. 2, and an opposed downstream facing outlet surface 106 with a plurality of bores 108 defined through flow body 102 from inlet surface 104 to outlet surface 106.

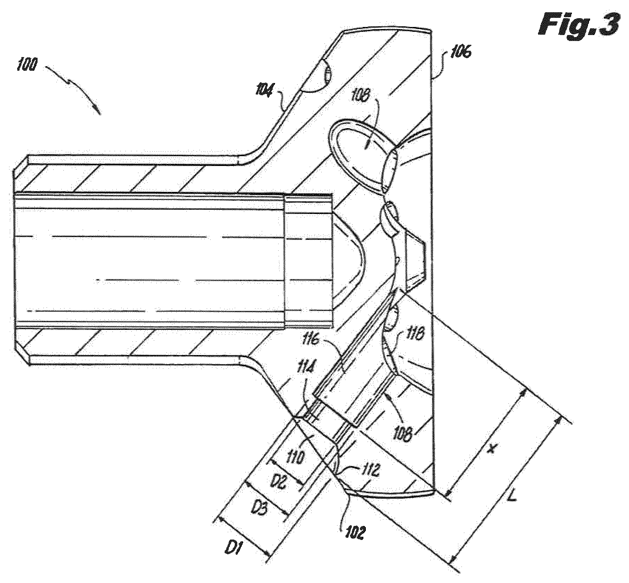

With reference now to Fig. 3, each bore 108 is configured to direct fluid flowing therethrough and includes an inlet portion 110 extending in a downstream direction from an inlet 112 where the bore meets inlet surface 104. An intermediate portion 114 extends in a downstream direction from inlet portion 110. A backstep portion 116 of bore 108 extends downstream from intermediate portion 114 to an outlet 118 where bore 108 meets outlet surface 106. Intermediate portion 114 of bore 108 has a cross-sectional flow area that is smaller than that of inlet portion 110 and smaller than that of backstep portion 116 to provide a backward facing step in flow area for flow through bore 108. It is also contemplated that bore 108 could have a cross-sectional flow area that is equal to that of inlet portion 110.

The intermediate portion 114 of bore 108 meets the backstep portion 116 of bore 108 at a position X that is between about 20% to about 80% of a length L of the bore 108 defined from inlet 112 to exit 118 of bore 108. Backstep portion 116 has a diameter D3 that is between about 20% and about 80% larger than the diameter D2 of the intermediate portion 114. It is also contemplated that the backstep portion 116 can have a cross-sectional area, e.g., normal to the flow direction, that is between about 40% to 225% larger than that of the intermediate portion 114. Diameter D1 of inlet portion 110 is also greater than diameter D2. Intermediate portion 114 is dimensioned to meter flow through the bores 108. It is contemplated that D1 could be equal to D2, e.g., where there is no chamfer, countersink, or the like on the inlet 112.

Inlet portion 110 of bore 108 includes a chamfer with a larger cross-sectional area than that of the bore downstream of the chamfer. Instead of a chamfer, a countersink or any other suitable entrance configuration can be used for providing a suitable discharge coefficient and suitably limit part-to-part variability in flow characteristics. Other suitable entrance configurations, for example, are discussed in U.S. Patent Application Publication No. 2014/0166143.

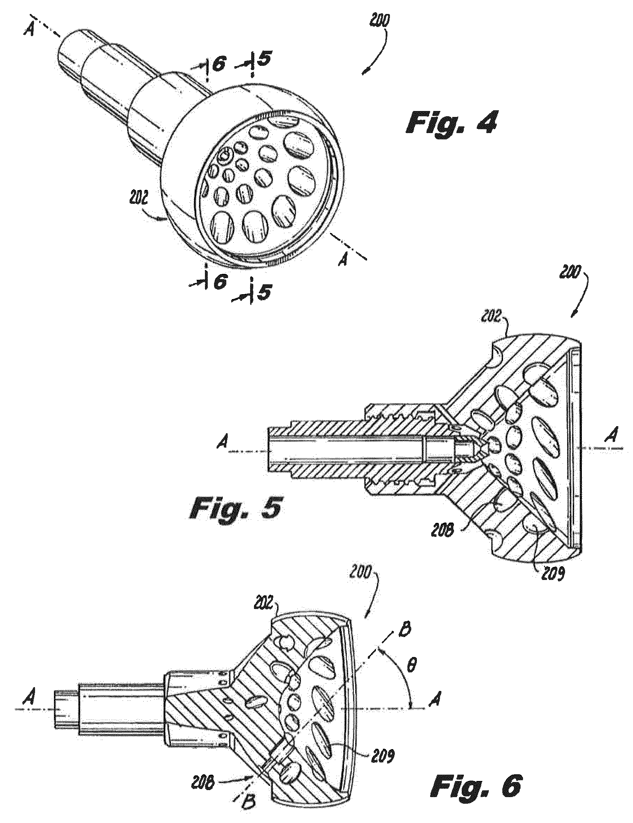

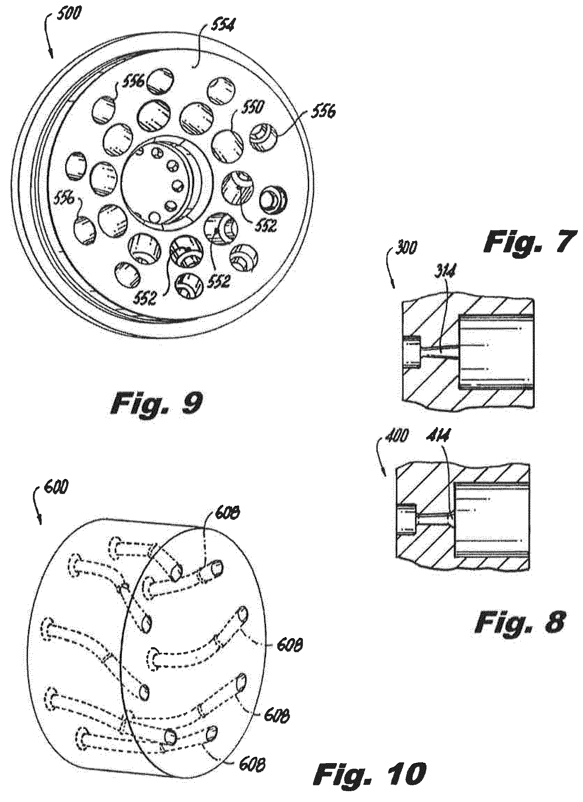

With reference now to Fig. 4, the flow body can be a mixer, such as air swirler 202 of atomizer 200. Bores 208, similar to bores 108 described above, are arranged circumferentially about a centerline axis A defined by the air swirler 202. Each bore 208 is aligned along a respective bore axis B, shown in Fig. 6, that has a tangential directional component, which can be noted by observing the location of cross-section 6-6 in Fig. 4, and a converging directional component, indicated by angle θ, relative to centerline axis A. The bores can include an inner set of bores 208, and an outer set of bores 209 also arranged circumferentially about centerline axis A, but outboard of the inner set of bores 208. Bores 209 include the same backstep feature as bores 208. As shown in Fig. 5, a pressure atomizer 238 is mounted in air swirler 202 along the centerline axis A. Air swirler 202 serves as a mixer to mix air passing through bores 208 with fuel issued from pressure atomizer 238. Those skilled in the art will readily appreciate that the bore arrangements shown in Figs. 1-6 are exemplary, and can be tailored to suit any given application, including using any number of sets of circumferentially arranged bores, any combination of converging, diverging, or axial bore orientations, and any suitable tangential or non-tangential bore alignment. For example, the back step portion downstream of the intermediate portion can be a tapered diffuser, such as tapered diffuser 314 of flow directing apparatus 300 in Fig. 7, a bellmouth diffuser, such as bellmouth diffuser 414 of flow directing apparatus 400 in Fig. 8, or any other suitable type of diffuser, opening gradually downstream of the intermediate portion rather than being a hard step.

With reference now to Fig. 9, another exemplary flow directing apparatus 500 is shown. Apparatus 500 includes countersink drilled hole mixers 550, which are the atomizing circuit which initially film and atomize the fuel, which is injected directly into these holes via orifices 552. Closely downstream from the nozzle face 554, this atomized fuel/air from mixers 550 will meet up with air from outer air circuit 556. The bores of outer air circuit 556 have the back step feature described herein such that the added turbulent energy aids in readily mixing the air that it is delivered with the atomized fuel. The fuel/air circuit of mixers 550 also has the back step feature described herein, not just to help increase mixing, but also to give some shelter to the fuel so it can be properly distributed around the circumference of the mixers 550.

In another example, back step features as described herein can be used with a prefilming liquid fuel circuit. For example, the swirler ports in the injectors shown and described in U.S. Patent Application Publication No. 2014/0338337 could be modified to benefit from the techniques described herein. Adding the back step mixing features described herein to the inner and outer air holes (reference characters 106 and 122 in that Publication) wherein the fuel is issued in through the fuel circuit would promote extra turbulent energy close the nozzle face and enhance mixing of the air and fuel.

With reference now to Fig. 10, it is not necessary for back step bores to be defined along straight lines. For example, flow directing body 600 in Fig. 10 includes back step bores 608 much as described above, wherein each of the bores 608 is curved. Those skilled in the art will readily appreciate that while bores shown and described herein are circular in cross-section, this is exemplary, and any suitable cross-sectional shape such as elliptical, trapezoidal, or the like, can be used without departing from the scope of this disclosure.

Any suitable manufacturing techniques can be used to form flow bodies as described herein. Conventional machining and/or additive manufacturing can be used.

Compared with traditional configurations having the same effective flow area (effective flow area is the mass flow rate that is allowed through the injector for a given upstream to downstream pressure drop), flow bodies as described herein can provide a significant increase in turbulent kinetic energy associated with backstep in the flow. This turbulence enhances mixing in close proximity to the bores. At a plane downstream of a nozzle, the flow from a flow body as described herein has a much more uniform velocity profile than traditional nozzles with the same effective flow area. This shows that the increased turbulent kinetic energy is being used effectively as a mixer.

When considering the characteristics of a single bore, e.g., bores 108, a large increase in turbulent kinetic energy is started in the backstep, e.g., where intermediate portion 114 and backstep portion 116 meet, and continues out into the local mixing portion of the flowfield. The characteristics of a drilled hole air swirler, e.g., air swirler 202, on a pressure atomizer such as pressure atomizer 238, include local mixing characteristics with improved mixing efficiency relative to traditional configurations. This improved mixing results in a noted reduction in the emissions of the pollutant NOx relative to conventional configurations. Moreover, the velocity profiles at the exit of the disclosed mixers are better mixed compared to traditional nozzles which have much larger jet-like portions in their velocity profiles. The increased mixing results in much lower peak temperatures, which in turn reduces the NOx emissions.

Those skilled in the art will readily appreciate that the geometries shown and described herein are for air swirlers. However, the concept is not limited to air swirlers since those skilled in the art having the benefit of this disclosure will readily be able to apply the techniques described herein to gas and liquid fuel circuits and the like. In addition, the concepts taught herein may readily be applied beyond the field of gas turbine fuel injectors. For example, those skilled in the art will readily appreciate how to adapt the techniques disclosed herein to any suitable device which is intended to mix or distribute gaseous and/or liquid materials such as in exhaust nozzles for aircraft engine exits, afterburners, chemical/material processing, and the like.

The methods and systems of the present disclosure, as described above and shown in the drawings provide for superior turbulent mixing. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A flow directing apparatus (100; 200; 300; 400; 500; 600) for directing fluid flowing therethrough, comprising:
a flow body (102; 202) defining an upstream facing inlet surface (104) and an opposed downstream facing outlet surface (106) with a bore (108; 208, 209; 550, 556; 608) defined through the flow body (102; 202) from the inlet surface (104) to the outlet surface (106), wherein the bore (108; 208, 209; 550, 556; 608) is configured to direct fluid flowing therethrough and includes:
an inlet portion (110) of the bore extending in a downstream direction from an inlet (112) where the bore (108; 208, 209; 550, 556; 608) meets the inlet surface (104);
an intermediate portion (114) of the bore (108; 208, 209; 550, 556; 608) extending in a downstream direction from the inlet portion (110) of the bore; and
a backstep portion (116; 314; 414) of the bore (108; 208, 209; 550, 556; 608) extending downstream from the intermediate portion (114) of the bore to an outlet (118) where the bore meets the outlet surface (106), wherein the intermediate portion (114) of the bore has a cross-sectional flow area that is smaller than or equal to that of the inlet portion (110) and smaller than that of the backstep portion (116; 314; 414) to provide a backward facing step in flow area for flow through the bore.

2. A flow directing apparatus (100; 200; 300; 400; 500; 600) as recited in claim 1, wherein the intermediate portion (114) of the bore (108; 208, 209; 550, 556; 608) meets the backstep portion (116; 314; 414) of the bore at a position that is between about 20% to about 80% of a length of the bore defined from the inlet (112) to the exit (118) of the bore.

3. A flow directing apparatus (100; 200; 300; 400; 500; 600) as recited in claim 1 or 2, wherein the backstep portion (116; 314; 414) of the bore (108; 208, 209; 550, 556; 608) has a cross-sectional area that is between about 40% and about 225% larger than the cross-sectional area of the intermediate portion (114) of the bore.

4. A flow directing apparatus (100; 200; 300; 400; 500; 600) as recited in any preceding claim, wherein the intermediate portion (114) of the bore (108; 208, 209; 550, 556; 608) is dimensioned to meter flow through the bore.

5. A flow directing apparatus (300; 400) as recited in any preceding claim, wherein the backstep portion includes a diffuser (314; 414) opening gradually downstream of the intermediate portion.

6. A flow directing apparatus (100; 200; 300; 400; 500; 600) for directing fluid flowing therethrough as claimed in any preceding claim, wherein a plurality of said bores (108; 208, 209; 550, 556; 608) are defined through the flow body (102; 202) from the inlet surface (104) to the outlet surface (106), wherein each bore (108; 208, 209; 550, 556; 608) is configured to direct fluid flowing therethrough and includes an inlet (112) where the bore meets the inlet surface (104) and an outlet (118) where the bore meets the outlet surface (106), wherein each bore (108; 208, 209; 550, 556; 608) includes:
an inlet portion (110) of the bore extending in a downstream direction from the inlet (112) of the bore;
an intermediate portion (114) of the bore extending in a downstream direction from the inlet portion (110) of the bore; and
a backstep portion (116; 314; 414) of the bore extending downstream from the intermediate portion (114) of the bore to the outlet (118) of the bore, wherein the intermediate portion (114) of the bore has a cross-sectional flow area that is smaller than or equal to that of the inlet portion (110) and smaller than that of the backstep portion (116; 314; 414) to provide a backward facing step in flow area for flow through the bore.

7. A flow directing apparatus (100; 200; 300; 400; 500; 600) as recited in claim 6, wherein the flow body (102; 202) is a mixer and the bores (108; 208, 209; 550, 556; 608) are arranged circumferentially about a center axis defined by the flow body.

8. A flow directing apparatus (100; 200) as recited in claim 6 or 7, wherein each bore (108; 208) is aligned along a bore axis (B) that has at least one of a tangential directional component or a converging directional component relative to a center axis defined by the flow body (102; 202).

9. A flow directing apparatus (200; 500) as recited in any of claims 6 to 8, wherein the bores include an inner set of bores (208; 550) arranged circumferentially about a centerline axis defined by the flow body (102; 202), and an outer set of bores (209; 556) arranged circumferentially about the centerline axis outboard of the inner set of bores.

10. A flow directing apparatus (100; 200; 300; 400; 500; 600) as recited in any of claims 6 to 9, wherein the bores (108; 208, 209; 550, 556; 608) are arranged circumferentially about a centerline axis defined by the flow body (102; 202), and further comprising an injector mounted in the flow body along the centerline axis.

11. A flow directing apparatus (100; 200; 300; 400; 500; 600) as recited in any of claims 6 to 10, wherein the intermediate portion (114) of the bore (108; 208, 209; 550, 556; 608) meets the backstep portion (116; 314; 414) of the bore at a position that is between about 20% to about 80% of a length of the bore defined from the inlet (112) to the exit (118) of the bore.

12. A flow directing apparatus (100; 200; 300; 400; 500; 600) as recited in any of claims 6 to 11, wherein the backstep portion (116; 314; 414) of the bore (108; 208, 209; 550, 556; 608) has a cross-sectional area that is between about 40% and about 225% larger than the cross-sectional area of the intermediate portion (114) of the bore.

13. A flow directing apparatus (100; 200; 300; 400; 500; 600) as recited in any of claims 6 to 12, wherein the intermediate portion (114) of the bore (108; 208, 209; 550, 556; 608) is dimensioned to meter flow through the bore.

14. A flow directing apparatus (100; 200; 300; 400; 500; 600) as recited in any of claims 6 to 13, wherein the inlet portion (110) of at least one of the bores (108; 208, 209; 550, 556; 608) includes a countersink with a larger cross-sectional area than that of the bore downstream of the countersink.

15. A flow directing apparatus (100; 200; 300; 400; 500; 600) as recited in any of claims 6 to 13, wherein the inlet portion (110) of at least one of the bores (108; 208, 209; 550, 556; 608) includes a chamfer with a larger cross-sectional area than that of the bore downstream of the countersink.
